# EUROPÄISCHE PATENTSCHRIFT

(11) **EP 0 835 366 B1**
(45) Veröffentlichungstag und Bekanntmachung des Hinweises auf die Patenterteilung: **18.08.1999**
(21) Anmeldenummer: 96916120.7
(22) Anmeldetag: 17.05.1996
(51) Int. Cl.: F01N 3/28, B01J 35/04, F01N 7/00

(54) **KATALYSATORANORDNUNG MIT ZWEI- ODER MEHRSTRÄNGIGER ABGASFÜHRUNG**
CATALYSER ARRANGEMENT WITH TWIN-PATH OR MULTIPLE PATH EXHAUST CHANNELLING
DISPOSITIF CATALYSEUR AVEC TRANSPORT DES GAZ D'ECHAPPEMENT A AU MOINS DEUX VOIES

(30) Priorität: 28.06.1995 DE 19523532
(43) Veröffentlichungstag der Anmeldung: 15.04.1998
(73) Patentinhaber: Emitec Gesellschaft für Emissionstechnologie mbH, 53797 Lohmar (DE)
(72) Erfinder: RECK, Alfred, D-51515 Kürten (DE); SIEPMANN, Uwe, D-51103 Köln (DE)
(74) Vertreter: Kahlhöfer, Hermann, Dipl.-Phys.
(86) Internationale Anmeldenummer: EP9602139
(87) Internationale Veröffentlichungsnummer: WO9701698

(56) Entgegenhaltungen:
- EP-A- 0 243 952
- DE-A- 2 745 841
- DE-A- 3 803 917
- DE-U- 9 317 050
- US-A- 4 261 170
- US-A- 5 365 735
- PATENT ABSTRACTS OF JAPAN vol. 13, no. 183 (M-820), 28.April 1989 & JP,A,01 012017 (TOYOTA), 17.Januar 1989,

## Beschreibung

Die vorliegende Erfindung bezieht sich auf eine Katalysatoranordnung für Abgasanlagen von Kraftfahrzeugen, insbesondere mit Otto-Motor, mit den Merkmalen des Oberbegriffs des Anspruchs 1 bzw. 4.

Katalytische Konverter zur Umsetzung von Abgasen, die einen in einem Mantel angeordneten, eine Vielzahl durch einen Fluid durchströmbare Kanäle aufweisenden, Wabenkörper umfassen, sind beispielsweise durch die EP 0 049 489 B1 bekannt. Die Wabenkörper bestehen vorzugsweise aus Blechlagen, wobei wenigstens ein Teil der Blechlagen wenigstens teilweise strukturiert ist. Die Blechlagen mit ihren Strukturen begrenzen Kanäle, die von einem Fluid durchströmbar sind.

Es sind Katalysatoranordnungen für Abgasanlagen bekannt, bei denen das Abgas zumindest in Teilbereichen der Abgasanlage in mindestens zwei getrennten Systemen geführt wird. Zur katalytischen Umsetzung des Abgases ist in jedem System mindestens ein katalytischer Konverter mit axial verlaufenden Kanälen angeordnet.

Durch die EP 0 245 738 B1 ist eine Katalysatoranordnung für Abgasanlagen von Kraftfahrzeugen bekannt, bei der das Abgas zumindest in Teilbereichen der Abgasanlage in mindestens zwei getrennten Systemen geführt wird, wobei in jedem System mindestens ein katalytischer Konverter mit axial verlaufenden Kanälen angeordnet ist. Diese katalytischen Konverter sind in einem gemeinsamen Gehäuse angeordnet. Hierzu schlägt die EP 0 245 738 B1 vor, Wabenkörper zu verwenden, die unabhängige Segmente innerhalb eines gemeinsamen Gehäuses bilden. Den einzelnen Segmenten können durch geeignete Rohrführungen einzelne Abgasstränge eines Abgassystems zugeordnet werden. Zur Ausbildung einer solchen Katalysatoranordnung wird durch die EP 0 245 738 B1 vorgeschlagen, den Konverter aus einzelnen Wabenkörpern aufzubauen, die einen entsprechenden Gesamtwabenkörper bilden. Die einzelnen Segmente weisen eine Mantel auf, mit dem zusätzliche Tragwände verbunden sind. Die Mäntel der einzelnen Segmente werden miteinander verbunden, wodurch ein Gesamtwabenkörper entsteht.

Aus der JP 10 12 017 ist desweiteren eine Katalysatoranordnung für Abgasanlagen von Kraftfahrzeugen bekannt, bei der Abgas zumindest in Teilbereichen der Abgasanlage in mindestens zwei getrennten Systemen geführt wird, wobei in jedem System mindestens ein katalytischer Konverter mit axial verlaufenden Kanälen angeordnet ist und diese katalystischen Konverter in einem gemeinsamen Gehäuse angeordent sind, wobei die katalytischen Konverter einen einzigen Wabenkörper bilden, der an mindestens einer Stirnseite mindestens eine den Querschnitt des Gehäuses unterteilende Trennwand aufweist, die wenigstens nahezu dichtend an die Stirnseite herangeführt ist.

Diesem Vorschlag liegt die Überlegung zugrunde, daß der Wabenkörper aus Lagen von wenigstens teilweise strukturierten Blechen aufgebaut ist. Wenigstens ein Teil der Bleche erstreckt sich über die gesamte axiale Länge des Wabenkörpers. Diese Bleche unterteilen mikroskopisch den Wabenkörper in einzelne von einem Fluid durchströmbare Kanäle. Für die makroskopische Unterteilung des Wabenkörpers in wenigstens zwei unabhängige Abgasstränge, die von Abgasen durchströmbar sind, ohne daß eine Durchmischung der Abgase im Wabenkörper stattfindet, bedarf es keiner zusätzlicher Trennwände, die sich über die gesamte axiale Länge des Wabenkörpers erstrecken. Zur getrennten Durchströmung des einzigen Wabenkörpers ist der Konverter mit wenigstens an einer Stirnseite des Wabenkörpers mindestens eine den Querschnitt des Gehäuses unterteilenden Trennwand vorgesehen. Durch diese Trennwand werden die bisher getrennten Abgasströme bis zum Eintrittsquerschnitt des Wabenkörpers durch die Trennwand im Gehäuse weiterhin getrennt. Die Trennwand ist wenigstens nahezu dichtend an die Stirnseite des Wabenkörpers herangeführt. Hierdurch wird eine Durchmischung der Abgase der einzelnen Abgasstränge vermieden. Dies ist insbesondere für die strömungstechnische Auslegung des Abgassystems im Hinblick auf die Beladung der Brennräume der Kraftarbeitsmaschine von Bedeutung.

Die Herstellung solcher Wabenkörper ist relativ aufwendig, insbesondere wenn bei vorgegebenem Einbauvolumen mehrere getrennt durch den Wabenkörper zu führenden Abgasstränge notwendig sind, da die Geometrie der einzelnen Segmente relativ kompliziert wird.

Hiervon ausgehend liegt der vorliegenden Erfindung die Aufgabe zugrunde, eine einfach herzustellende Katalysatoranordnung anzugeben, die zur getrennten Abgasführung einzelner Abgasstränge eines Abgassystems geeignet ist. Ein weiteres Ziel ist es, den Herstellungsaufwand eines Konverters für eine solche Anordnung zur katalytischen Umsetzung zu verringern.

Zur Lösung dieser Aufgabe wird eine Katalysatoranordnung für Abgasanlagen von Kraftfahrzeugen, insbesondere für Otto-Motoren, mit den Merkmalen des Anspruchs 1 bzw. des Anspruchs 4 vorgeschlagen. Vorteilhafte Weitergestaltungen sind Gegenstand der jeweiligen abhängigen Ansprüche.

Ein erster erfindungsgemäßer Lösungsvorschlag einer Katalysatoranordnung für Abgasanlagen von Kraftfahrzeugen zeichnet sich dadurch aus, daß die Trennwand in einen Schlitz in der Strinseite des Wabenkörpers hineinragt. Durch das Hineinragen der Trennwand in einen Schlitz in der Stirnseite des Wabenkörpers wird in vorteilhafter Weise die Dichtung der Trennwand zum Wabenkörper auch bei thermischen Wechselbelastungen erhöht, ohne daß der Wabenkörper bei Relativdehnungen der Trennwand beschädigt werden kann.

Indem die katalytischen Konverter einen einzigen Wabenkörper bilden, können auch bisher bekannte Wabenkörper zur Ausbildung des einzigen Wabenkörpers der erfindungsgemäßen Katalysatoranordnung herangezogen werden. Dieser Vorschlag hat den Vorteil, daß die bereits vorhandene, durch die Blechlagen bestehende Unterteilung des Wabenkörpers im Zusammenspiel mit der Trennwand, genutzt werden kann. Die bisherigen Werkzeuge für die Herstellung eines solchen Wabenkörpers können weiterhin verwendet werden. Hierdurch vereinfacht sich die Herstellung und somit auch die Herstellungskosten eines erfindungsgemäßen Wabenkörpers.

Vorzugsweise ist die Trennwand am Gehäuse befestigt. Die Trennwand verläuft vorzugsweise diagonal im Anschlußflansch oder Anschlußkonus. Der Schlitz an der Stirnseite des Wabenkörpers kann z. B. durch Funkenerosion im Wabenkörper ausgebildet werden. Die Trennwand bildet mit der Wandung des Schlitzes des Wabenkörpers einen Schiebesitz. Zur Vermeidung eines Austausches der Abgase zwischen den einzelnen Abgassträngen ist der Schiebesitz vorzugsweise nahezu dichtend ausgebildet.

Gemäß einem weiteren erfinderischen Gedanken wird vorgeschlagen, die Trennwand zweiteilig aufzubauen, wobei ein erster Teil der Trennwand direkt an dem Wabenkörper selbst befestigt ist und mit Schiebesitz dichtend mit einem zweiten Teil der Trennwand zusammenwirkt, der am Gehäuse oder am Anschlußflansch befestigt ist. Durch diese Ausbildung der Katalysatoranordnung wird das unterschiedliche, temperaturbedingte Ausdehnungsverhalten der Komponenten, insbesondere des Wabenkörpers, berücksichtigt. Durch die Schiebesitzausbildung werden einerseits von dem Wabenkörper keine Kräfte auf die Trennwand und andererseits keine Kräfte vom Gehäuse oder dem Anschlußflansch über die Trennwand in den Wabenkörper eingeleitet. Vielmehr resultiert der zweiteilige Aufbau in vorteilhafter Weise in einer weiter verbesserten Gesamtabdichtung, da der erste Teil der Trennwand direkt am Wabenkörper und der zweite Teil direkt am Gehäuse befestigt ist.

Vorzugsweise ist der Wabenkörper ein monolithischer, metallischer Wabenkörper, der aus gewickelten oder geschichteten, zumindest teilweise zur Bildung der Kanäle strukturierten Blechlagen gebildet ist.

Zur Verbindung der Trennwand oder der Trennwände wird vorgeschlagen, diese mit wenigstens einem Verbindungselement zu verbinden, wobei das Verbindungselement wenigstens teilweise in den Wabenkörper hineinragt. Das Verbindungselement weist vorzugsweise einen Querschnitt und/oder eine Form auf, die so gestaltet ist bzw. sind, daß das oder die Verbindungselemente in ausgewählte und/oder beliebige Kanäle eingeschoben mechanischen Kontakt mit deren Wänden hat bzw. haben. Für eine dauerhafte Verbindung der Verbindungselemente mit dem Wabenkörper werden diese zweckmäßigerweise mit dem Wabenkörper verlötet.

Bevorzugt ist eine Ausbildung der Vorrichtung, bei der jede Trennwand mit einem Verbindungselement starr verbunden ist und mit gegebenenfalls weiteren Verbindungselementen jeweils einen Schiebesitz bildet. Die Ausbildung des Schiebesitzes hat den Vorteil, daß unterschiedliches Dehnungsverhalten des Wabenkörpers und der Trennwände bzw. der Trennwand ausgeglichen werden kann, ohne daß durch die Verbindungselemente in die Trennwand oder in den Wabenkörper Kräfte eingeleitet werden.

Gemäß einem weiteren Vorschlag weist die Vorrichtung wenigstens eine Trennwand auf, die einen geschlossenen Linienzug bildet, wobei der Flächeninhalt des geschlossenen Linienzug kleiner ist als die Eintrittsquerschnittsfläche bzw. Austrittsquerschnittsfläche des Wabenkörpers. Bevorzugt ist ein geschlossener Linienzug, welcher kreisförmig ist.

Statt oder zusätzlich zu den Verbindungselementen kann die Befestigung der Trennwand mit dem Wabenkörper auch dadurch erfolgen, daß dieser wenigstens einen sich über ein Teil der axialen Länge des Wabenkörpers erstreckenden Schlitz aufweist, in den die Trennwand hineinragt.

Zu jeder Kammer wird ein Abgas über eine gesonderte Zuleitung zugeführt. Die Ableitung der einzelnen Abgasströme kann über gesonderte Leitungen erfolgen. Dies ist nicht zwingend notwendig. Vorzugsweise weist die Trennwand einen ersten Teil auf, der im Querschnitt U-förmig mit einer Basis und zwei mit der Basis verbundenen Stegen ausgebildet ist, wobei die Basis dem Wabenkörper zugewandt ist. Die im Querschnitt U-förmig ausgebildete Trennwand wird dabei so mit dem Wabenkörper verbunden, daß die Basis der Trennwand dem Wabenkörper zugewandt ist. Die Stege ragen am Eintrittsquerschnitt entgegen der Strömungsrichtung eines Abgases. Zwischen die Stege wird der zweite Teil der Trennwand mit Schiebesitz eingebracht. Hierdurch wird ein unterschiedliches Dehnungsverhalten aufgrund von Temperaturdehnungen ausgeglichen.

Vorzugsweise sind die Trennwände an beiden Stirnseiten des Wabenkörpers ausgebildet. Der Wabenkörper weist einen runden oder einen ovalen Querschnitt auf. Andere Querschnitte des Wabenkörpers sind ebenso möglich. Die vorstehende Erfindung ist nicht nur auf Katalysatoranordnungen mit einem metallischen Wabenkörper beschränkt, es können auch keramische Wabenkörper verwendet werden.

Weitere Vorteile und Merkmale der erfindungsgemäßen Vorrichtung werden in der Zeichnung anhand dreier bevorzugter Ausführungsbeispiele erläutert, ohne daß der Gegenstand der Erfindung auf diese Ausführungsbeispiele beschränkt wird. Es zeigen:
- Figur 1: zeigt ein erstes Ausführungsbeispiel eines Wabenkörpers im Vollschnitt,
- Figur 2: die Seitenansicht von links des Wabenkörpers nach Figur 1,
- Figur 3: ein zweites Ausführungsbeispiel eines Wabenkörpers im Vollschnitt,
- Figur 4: Seitenansicht von links des Wabenkörpers nach Figur 3 und
- Figur 5: schematisch eine Katalysatoranordnung im Schnitt.

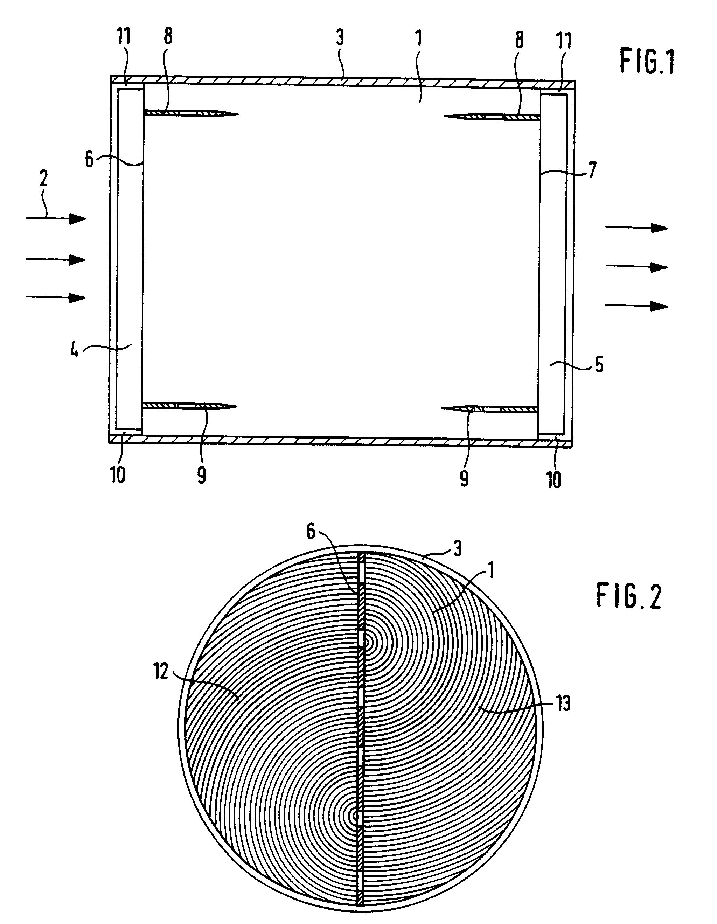

In den Figuren 1 und 2 ist ein erstes Ausführungsbeispiel eines Wabenkörpers dargestellt. Der Wabenkörper 1 ist, wie aus der Figur 2 ersichtlich, S-förmig geschlungen. Dieser Wabenkörper ist in einem Mantel 3 angeordnet. Am Eintrittsquerschnitt 6 und am Austrittsquerschnitt 7 des Wabenkörpers 1 ist jeweils ein erster Teil 7 einer Trennwand 22 angeordnet. Die ersten Teile 6, 7 erstrecken sich in einer radialen Ebene des Wabenkörpers 1, wobei die Umschlingungsachsen, um die der Wabenkörper 1 umschlungen wurde, überdeckt werden. Sowohl der erste Teil 6 am Eintrittsquerschnitt 4 als auch der erste Teil 7 am Austrittsquerschnitt 5 des Wabenkörpers 1 liegt unmittelbar am Wabenkörper 1 an. Zur Verbindung der ersten Teile 6, 7 der Trennwand mit dem Wabenkörper 1 sind an jedem Teil 6, 7 jeweils zwei Verbindungselemente 8, 9 angeordnet. Die Verbindungselemente 8, 9 ragen in den Wabenkörper 1 hinein. Wie insbesondere aus der Figur 1 ersichtlich ist, besteht zwischen dem Mantel 3 und dem ersten Teil 6 bzw. 7 jeweils ein Spalt 10, 11, welche ein radiales Dehnen des ersten Teils 6 bzw. 7 ermöglicht. Mit den Pfeilen und den zugehörigen Bezugszeichen 2 soll eine Gasströmung angedeutet werden. Sowohl der erste Teil 6 als auch der erste Teil 7 liegen in einer gemeinsamen Ebene. Sie unterteilen den Wabenkörper 1 makroskopisch in zwei Kammern 12, 13, die unabhängig voneinander von einem Abgas durchströmbar sind.

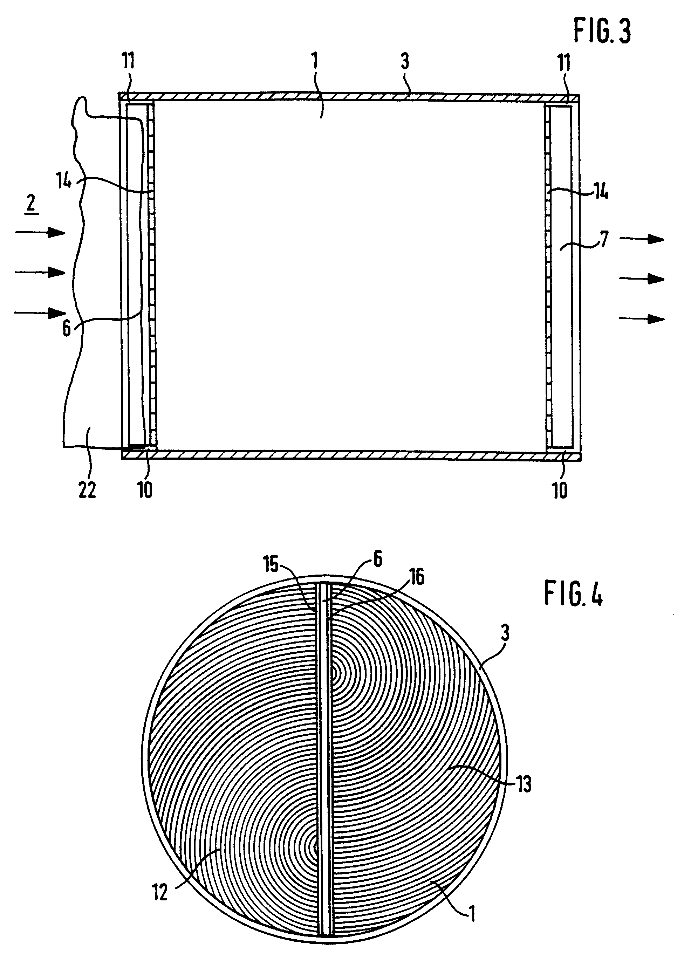

In den Figuren 3 und 4 ist ein zweites Ausführungsbeispiel einer Vorrichtung dargestellt. Dieses Ausführungsbeispiel unterscheidet sich von dem den Figuren 1 und 2 dargestellten Ausführungsbeispiel dadurch, daß die ersten Teile 6, 7 im Querschnitt U-förmig ausgebildet sind. Die ersten Teile 6, 7 weisen jeweils eine Basis 14 auf, die jeweils unmittelbar am Wabenkörper 1 anliegt. Von der Basis 14 weg strecken sich zwei im Abstand zueinander ausgebildeten Stege 15, 16. Zwischen die Stege 15, 16 greift der zweite Teil einer Trennwand 21 ein. Die Stege 15, 16 und der zweite Teil 21 überlappen sich hierdurch teilweise, wodurch eine unterschiedliche thermische Ausdehnung der Bauteile der Anordnung ausgeglichen werden können.

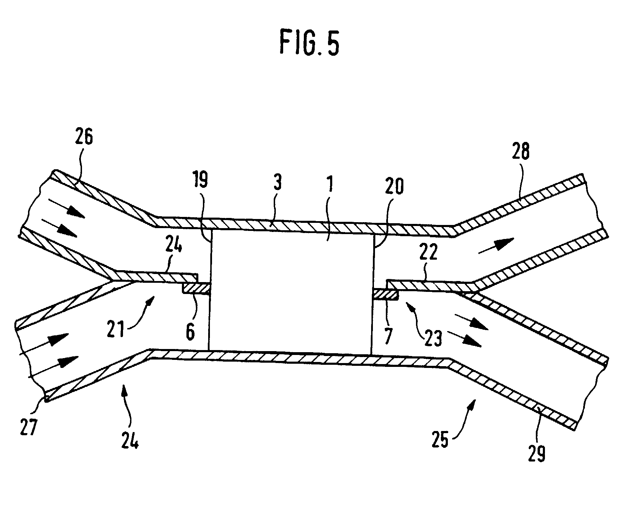

In der Figur 5 ist schematisch eine Katalysatoranordnung im Schnitt dargestellt. Die Katalysatoranordnung für Abgasanlagen von Kraftfahrzeugen, insbesondere für Otto-Motoren, umfaßt einen Wabenkörper 1, der in einem Mantel 3 angeordnet ist. An den Mantel 3 schließen sich die Anschlußstücke 24, 25 an. Jedes Anschlußstück 24, 25 ist mit jeweils zwei Leitungen 26, 27 bzw. 28, 29 verbunden. In dem jeweiligen Anschlußstück 24, 25 ist jeweils eine Trennwand 21, 23 ausgebildet. Der erste Teil 6 der Trennwand 21 ist auf der Stirnseite 19 des Wabenkörpers 1 angeordnet. Der erste Teil 6 der Trennwand 21 bildet mit dem zweiten Teil 24 der Trennwand 21 einen Schiebesitz. Das Abgas, welches über die Leitungen 26, 27 und das Anschlußstück 24 dem Wabenkörper 1 zugeleitet wird, durchströmt den Wabenkörper 1 und strömt am Austrittsquerschnitt 20 aus dem Wabenkörper 1 heraus. Am Austritt des Wabenkörpers 1 ist an der Stirnseite der erste Teil 7 einer Trennwand 23 angeordnet. Die Trennwand 23 weist ferner einen zweiten Teil 22 auf, der mit Schiebesitz auf dem ersten Teil 7 angeordnet ist. Die Schiebesitze sind nahezu abgasdicht.

## Patentansprüche

1. Katalysatoranordnung für Abgasanlagen von Kraftfahrzeugen, insbesondere mit otto-Motor, bei der Abgas zumindest in Teilbereichen der Abgasanlage in mindestens zwei getrennten Systemen geführt wird, wobei in jedem System mindestens ein katalytischer Konverter mit axial verlaufenden Kanälen angeordnet ist und diese katalytischen Konverter in einem gemeinsamen Gehäuse angeordnet sind, wobei die katalytischen Konverter einen einzigen Wabenkörper (1) bilden, der an mindestens einer Stirnseite (19, 20) mindestens eine den Querschnitt des Gehäuses (32) unterteilende Trennwand (21) aufweist, die wenigstens nahezu dichtend an die Stirnseite (19, 20) herangeführt ist, dadurch gekennzeichnet, daß die Trennwand (21) in einen Schlitz in der Stirnseite (19, 20) des Wabenkörpers (1) hineinragt.

2. Katalysatoranordnung nach Anspruch 1, dadurch gekennzeichnet, daß die Trennwand (21) am Gehäuse (3) befestigt ist, insbesondere diagonal im Anschlußflansch oder Anschlußkonus verläuft.

3. Katalysatoranordnung nach Anspruch 2, dadurch gekennzeichnet, daß die Trennwand (21, 23) mit dem Schlitz einen nahezu dichtenden Schiebesitz bildet.

4. Katalysatoranordnung für Abgasanlagen von Kraftfahrzeugen, insbesondere mit Otto-Motor, bei der Abgas zumindest in Teilbereichen der Abgasanlage in mindestens zwei getrennten Systemen geführt wird, wobei in jedem System mindestens ein katalytischer Konverter mit axial verlaufenden Kanälen angeordnet ist und diese katalytischen Konverter in einem gemeinsamen Gehäuse angeordnet sind, wobei die katalytischen Konverter einen einzigen Wabenkörper (1) bilden, der an mindestens einer Stirnseite (19, 20) mindestens eine den Querschnitt des Gehäuses (32) unterteilende Trennwand (21) aufweist, die wenigstens nahezu dichtend an die Stirnseite (19, 20) herangeführt ist, dadurch gekennzeichnet, daß die Trennwand (21, 23) zweiteilig aufgebaut ist, wobei ein erster Teil (6, 7) direkt an dem Wabenkörper (1) selbst befestigt ist und mit Schiebesitz dichtend mit einem zweiten Teil (22, 24) zusammenwirkt, der am Gehäuse (3) oder am Anschlußflansch (24, 25) befestigt ist.

5. Katalysatoranordnung nach einem der vorhergehenden Ansprüche, dadurch gekennzeichnet, daß der Wabenkörper (1) ein metallischer Wabenkörper aus gewickelten oder geschichteten, zumindest teilweise zur Bildung der Kanäle strukturierten Blechlagen ist.

6. Katalysatoranordnung nach Anspruch 4 oder 5, dadurch gekennzeichnet, daß der erste Teil (6, 7) der Trennwand (21) wenigstens ein Verbindungselement (8, 9) aufweist, das wenigstens teilweise in den Wabenkörper (1) hineinragt.

7. Katalysatoranordnung nach Anspruch 6, dadurch gekennzeichnet, daß Querschnitt und/oder die Form des oder der verbindungselemente(s) (8, 9) in dem in den Wabenkörper (1) ragenden Abschnitt so gestaltet ist bzw. sind, daß das oder die Verbindungselement(e) (8, 9) in ausgewählte und/oder beliebige Kanäle eingeschoben mechanischen Kontakt mit deren Wänden hat bzw. haben.

8. Katalysatoranordnung nach Anspruch 6 oder 7, dadurch gekennzeichnet, daß das oder die Verbindungselement(e) (8, 9) mit dem Wabenkörper (1) verlötet ist bzw. sind.

9. Katalysatoranordnung nach einem der Ansprüche 2 bis 7, dadurch gekennzeichnet, daß der Wabenkörper (1) mit wenigstens einem sich nur über einen Teil der axialen Länge des Wabenkörpers (1) erstreckendem Schlitz versehen ist, in den der erste Teil der am Wabenkörper befestigten Trennwand (6, 7) hineinragt.

10. Katalysatoranordnung nach einem der Ansprüche 4 bis 9, dadurch gekennzeichnet, daß der erste Teil der Trennwand (6, 7) im Querschnitt U-förmig mit einer Basis (14) und zwei mit der Basis (14) verbundenen Stegen (15, 16) ausgebildet ist, wobei die Basis (14) dem Wabenkörper (1) zugewandt ist.

11. Katalysatoranordnung nach Anspruch 10, dadurch gekennzeichnet, daß der zweite Teil (22, 24) der Trennwand (21, 23) mit Schiebesitz zwischen die Stege (15, 16) des ersten Teils (6, 7) der Trennwand (21, 23) hineinragt.

12. Katalysatoranordnung nach einem der vorhergehenden Ansprüche, dadurch gekennzeichnet, daß Trennwände an beiden Stirnseiten vorhanden sind.

13. Katalysatoranordnung nach einem der vorhergehenden Ansprüche, dadurch gekennzeichnet, daß der Wabenkörper (1) einen runden Querschnitt aufweist.

14. Katalysatoranordnung nach einem der Ansprüche 1 bis 12, dadurch gekennzeichnet, daß der Wabenkörper (1) einen ovalen Querschnitt aufweist.

15. Katalysatoranordnung nach einem der vorhergehenden Ansprüche, dadurch gekennzeichnet, daß zwei sich kreuzende Trennwände vorhanden sind, die den Eintritts- und/oder Austrittsquerschnitt des Wabenkörpers in vier Teile unterteilen.

## Claims

1. A catalyst arrangement for exhaust installations of motor vehicles, in particular with an Otto engine, in which exhaust gas is guided at least in portions of the exhaust installation in at least two separate systems, wherein at least one catalytic converter with axially extending passages is arranged in each system and said catalytic converters are arranged in a common housing, wherein the catalytic converters form a single honeycomb body (1) which at at least one end (19, 20) has at least one partition (21) which subdivides the cross-section of the housing (32) and which is taken at least almost in sealing relationship to the end (19, 20). characterised in that the partition (21) projects into a slot in the end (19, 20) of the honeycomb body.

2. A catalyst arrangement according to claim 1 characterised in that the partition (21) is fixed to the housing (3) and in particular extends diagonally in the connecting flange or connecting cone.

3. A catalyst arrangement according to claim 2 characterised in that the partition (21, 23) forms with the slot an almost sealing sliding fit.

4. A catalyst arrangement for exhaust installations of motor vehicles, in particular with an Otto engine, in which exhaust gas is guided at least in portions of the exhaust installation in at least two separate systems, wherein at least one catalytic converter with axially extending passages is arranged in each system and said catalytic converters are arranged in a common housing, wherein the catalytic converters form a single honeycomb body (1) which at at least one end (19, 20) has at least one partition (21) which subdivides the cross-section of the housing (32) and which is taken at least almost in sealing relationship to the end (19, 20), characterised in that the partition (21, 23) is of a two-part structure, wherein a first part (6, 7) is fixed directly to the honeycomb body (1) itself and co-operates with a sliding fit in sealing relationship with a second part (22, 24) which is fixed to the housing (3) or to the connecting flange (24, 25).

5. A catalyst arrangement according to one of the preceding claims characterised in that the honeycomb body (1) is a metallic honeycomb body comprising wound or stacked sheet metal layers which are at least partially structured to form the passages.

6. A catalyst arrangement according to claim 4 or claim 5 characterised in that the first part (6, 7) of the partition (21) has at least one connecting element (8, 9) which at least partially projects into the honeycomb body (1).

7. A catalyst arrangement according to claim 6 characterised in that the cross-section and/or the shape of the connecting element or elements (8, 9) in the portion projecting into the honeycomb body (1) is or are such that the connecting element or elements (8, 9) inserted into selected and/or any passages has or have mechanical contact with the walls thereof.

8. A catalyst arrangement according to claim 6 or claim 7 characterised in that the connecting element or elements (8, 9) is or are brazed to the honeycomb body (1).

9. A catalyst arrangement according to one of claims 2 to 7 characterised in that the honeycomb body (1) is provided with at least one slot which extends only over a part of the axial length of the honeycomb body (1) and into which the first part of the partition (6. 7) fixed to the honeycomb body projects.

10. A catalyst arrangement according to one of claims 4 to 9 characterised in that the first part of the partition (6, 7) is of a U-shaped configuration in cross-section with a base (14) and two legs (15, 16) which are connected to the base (14). wherein the base (14) faces towards the honeycomb body (1).

11. A catalyst arrangement according to claim 10 characterised in that the second part (22, 24) of the partition (21, 23) projects with a sliding fit between the legs (15, 16) of the first part (6, 7) of the partition (21, 23).

12. A catalyst arrangement according to one of the preceding claims characterised in that partitions are present at both ends.

13. A catalyst arrangement according to one of the preceding claims characterised in that the honeycomb body (1) is of a round cross-section.

14. A catalyst arrangement according to one of claims 1 to 12 characterised in that the honeycomb body (1) is of an oval cross-section.

15. A catalyst arrangement according to one of the preceding claims characterised in that there are two mutually crossing partitions which subdivide the inlet and/or outlet cross-section of the honeycomb body into four parts.

## Revendications

1. Dispositif catalyseur destiné à des installations de gaz d'échappement de véhicules automobiles, équipés notamment de moteurs Otto, dans le cas duquel les gaz d'échappement sont guidés, au moins dans des zones partielles de l'installation de gaz d'échappement, dans au moins deux systèmes séparés, au moins un convertisseur catalytique comportant des canaux qui s'étendent axialement étant disposé dans chaque système, et ces convertisseurs catalytiques étant disposés dans un carter commun, les convertisseurs catalytiques qui forment un seul corps alvéolaire (1) comportant, au moins sur une face frontale (19, 20), au moins une cloison de séparation (21) subdivisant la section transversale du carter (32), laquelle s'étend de façon au moins approximativement étanche jusqu'à la face frontale (19, 20), caractérisé en ce que la cloison de séparation (21) s'engage dans une fente pratiquée dans la face frontale (19, 20) du corps alvéolaire (1).

2. Dispositif catalyseur selon la revendication 1, caractérisé en ce que la cloison de séparation (21) est fixée sur le carter (3), et s'étend notamment en diagonale dans la bride de raccordement ou le cône de raccordement.

3. Dispositif catalyseur selon la revendication 2, caractérisé en ce que la cloison de séparation (21, 23) forme avec la fente un ajustement coulissant assurant pratiquement l'étanchéité.

4. Dispositif catalyseur destiné à des installations de gaz d'échappement de véhicules automobiles, équipés notamment des moteurs Otto, dans le cas duquel les gaz d'échappement sont guidés, au moins dans des zones partielles de l'installation de gaz d'échappement, dans au moins deux systèmes séparés, au moins un convertisseur catalytique comportant des canaux qui s'étendent axialement étant disposé dans chaque système, et ces convertisseurs catalytiques étant disposés dans un carter commun, les convertisseurs catalytiques qui forment un seul corps alvéolaire (1) comportant, au moins sur une face frontale (19, 20), au moins une cloison de séparation (21) subdivisant la section transversale du carter (32), laquelle s'étend de façon au moins approximativement étanche jusqu'à la face frontale (19, 20), caractérisé en ce que la cloison de séparation (21, 23) est réalisée en deux parties, une première partie (6, 7) étant fixée directement sur le corps alvéolaire (1) même, et agissant conjointement par ajustement coulissant assurant l'étanchéité avec une deuxième partie (22, 24) qui est fixée sur le carter (3) ou sur la bride de raccordement (24, 25).

5. Dispositif catalyseur selon l'une quelconque des revendications précédentes, caractérisé en ce que le corps alvéolaire (1) est un corps alvéolaire métallique constitué de couches de tôles enroulées ou empilées, au moins partiellement structurées, afin de former les canaux.

6. Dispositif catalyseur selon la revendication 4 ou 5, caractérisé en ce que la première partie (6, 7) de la cloison de séparation (21) comporte au moins un élément de liaison (8, 9) qui pénètre, au moins partiellement, dans le corps alvéolaire (1).

7. Dispositif catalyseur selon la revendication 6, caractérisé en ce que la section transversale et/ou la forme de la partie du ou des éléments de liaison (8, 9) pénétrant dans le corps alvéolaire (1) est agencée de telle sorte que l'élément ou les éléments de liaison (8, 9) inséré(s) dans des canaux choisis et/ou quelconques soit ou soient en contact mécanique avec les parois de ceux-ci.

8. Dispositif catalyseur selon la revendication 6 ou 7, caractérisé en ce que l'élément ou les éléments de liaison (8, 9) est ou sont brasés sur le corps alvéolaire (1).

9. Dispositif catalyseur selon l'une quelconque des revendications 2 à 7, caractérisé en ce que le corps alvéolaire (1) est muni d'au moins une fente, qui ne s'étend que sur une partie de la longueur axiale du corps alvéolaire (1), dans laquelle s'engage la première partie (6, 7) de la cloison de séparation fixée sur le corps alvéolaire.

10. Dispositif catalyseur selon l'une quelconque des revendications 4 à 9, caractérisé en ce que la première partie (6, 7) de la cloison de séparation est réalisée avec une section transversale en forme de U, comportant une base (14) et deux nervures (15, 16) reliées à la base (14), la base (14) faisant face au corps alvéolaire (1).

11. Dispositif catalyseur selon la revendication 10, caractérisé en ce que la deuxième partie (22, 24) de la cloison de séparation (21, 23) s'engage par ajustement coulissant entre les nervures (15, 16) de la première partie (6, 7) de la cloison de séparation (21, 23).

12. Dispositif catalyseur selon l'une quelconque des revendications précédentes, caractérisé en ce que des cloisons de séparation sont prévues sur les deux faces frontales.

13. Dispositif catalyseur selon l'une quelconque des revendications précédentes, caractérisé en ce que le corps alvéolaire (1) a une section transversale circulaire.

14. Dispositif catalyseur selon l'une quelconque des revendications 1 à 12, caractérisé en ce que le corps alvéolaire (1) a une section transversale ovale.

15. Dispositif catalyseur selon l'une quelconque des revendications précédentes, caractérisé en ce qu'on prévoit deux cloisons de séparation se croisant, qui subdivisent la section transversale d'entrée et/ou de sortie du corps alvéolaire en quatre parties.
